# EUROPEAN PATENT APPLICATION

(11) **EP 4 527 499 A1**
(43) Date of publication of application: **26.03.2025**
(21) Application number: 24200413.3
(22) Date of filing: 13.09.2024
(51) Int. Cl.: B01J 21/04, B01J 23/755, B01J 23/83, B01J 35/61, B01J 35/63, B01J 35/64, B01J 37/00, B01J 37/02, B01J 37/08

(54) **A CATALYST FOR HYDROGENATION OF UNSATURATED HYDROCARBONS AND A METHOD FOR PREPARATION THEREOF**

(30) Priority: 19.09.2023 IN 202321062858
(71) Applicant: Indian Oil Corporation Limited, Bandra (East) Maharashtra, Mumbai 400 051 (IN)
(72) Inventor: NUNNA, Vamsi Krishna, 121007 Faridabad (IN); XAVIER, Kochappilly Ouseph, 121007 Faridabad (IN); PULIKOTTIL, Alex Cheru, 121007 Faridabad (IN); SAU, Madhusudan, 121007 Faridabad (IN); RAMAKUMAR, Sankara Sri Venkata, 121007 Faridabad (IN)
(74) Representative: Turner, Craig Robert

(57) **Abstract**

The present invention relates to a high-active catalyst for hydrogenation of unsaturated hydrocarbons, particularly aromatic compounds, in middle distillate refinery streams, wherein the catalyst comprises oxides of transition metals, preferably nickel oxide and cobalt oxide impregnated on an activated alumina-ceria carrier with a loading in a range of 20 to 30 wt.% of the total dry weight of the catalyst. The active metals nickel and cobalt of the catalyst forms a bimetallic active site dispersed on the activated alumina-ceria carrier surface such that at least 50% of the loaded metal undergoes reduction with hydrogen gas in a temperature range of 150 to 850 °C. The resultant catalyst has exhibited high activity for hydrogenating unsaturated hydrocarbons like aromatics in kerosene and diesel streams.

## Description

### FIELD OF THE INVENTION

The present invention relates to a catalyst for hydrogenating unsaturated hydrocarbons and a method of preparation of the catalyst. More particularly, the present invention relates to a catalyst with an improved activity and stability for hydrogenation of unsaturated hydrocarbons, wherein the catalyst comprises active components selected from group consisting of nickel oxide and cobalt oxide impregnated on an activated alumina-ceria carrier, to have its loading in a range of 20 to 30 wt.% of the total dry weight of the catalyst. The present invention also provides a method for the preparation of the catalyst comprising blending and impregnation steps. Further, the catalyst of the present invention is utilized for the de-aromatization of kerosene and diesel streams to obtain ultra-low aromatic solvents and wherein the catalyst exhibited higher activity than conventional Ni/Al₂O₃ based catalysts.

### BACKGROUND OF THE INVENTION

Refinery streams often contain high levels of unsaturated compounds like aromatics and require its de-aromatization to obtain specific products meeting the required specifications and desired properties. For example, hydrogenation of aromatics in diesel fuel enables to increase its cetane number which is one of the critical parameters to be met for complying with present day fuel quality specifications. Similarly, removal of aromatics from jet fuel leads to improvement of its smoke point. Further, lower aromatic content in kerosene and diesel is an essential requirement for its application as solvents for several specialty applications in paints, varnishes, adhesives, cosmetics, pharmaceuticals, cleaning fluids, rolling oils, drilling fluids, metal working fluids, polymer formulations etc.

Middle distillate fractions like diesel and kerosene obtained from hydrocracker unit are generally found to have high concentrations of aromatics. It is widely recognized that production of diesel and kerosene with ultra-low levels of aromatics cannot achieve through conventional hydrotreating of the feedstocks and therefore dedicated de-aromatization units are employed in the downstream of hydrotreating units to deeply reduce aromatics, wherein the feedstock is subjected to catalytic hydrogenation process in one or more catalytic beds at appropriate conditions of temperature and pressures. The performance of such de-aromatization process is mainly dependent on the efficiency of catalyst used in the unit.

Noble metal-based catalysts are widely reported for hydrogenation of aromatic hydrocarbons in hydrocarbon oils. For example, US 3592758 describes about a sulfur tolerant Pt/Al₂O₃ catalyst for obtaining a product with 0.3 vol% aromatics from feedstock having 13.4 vol% aromatics and 150 ppm sulfur. US 3607729 reported noble metal catalysts with acidic support like alumina containing fluoride for aromatic hydrogenation. US 5391292 used acidic catalysts, wherein Y-zeolite is used as the support for the Group VIII noble metals, for aromatic saturation reactions. Further, US 6288007 reported a sulfur tolerant Pt catalyst supported on silica modified alumina for hydrogenation of middle distillate aromatics having 50 ppm sulfur. US 6524993 refers to a catalyst, wherein a silica magnesia carrier with magnesia content of 25 to 50 wt.% is loaded with noble metals selected from group VIII metals.

Although noble metal-based catalysts are highly active for hydrogenation of aromatic compounds, they are less preferred for commercial applications due to its exceedingly high and volatile cost, and high sensitivity to be poisoned by even trace amounts of sulfur compounds present in the feedstocks. The impacts of poisoning of such catalysts by sulfur become more significant when hydrogenation to ultra-low aromatic content is targeted. Moreover, acid-functionalized noble metal catalysts are likely to additionally cause the undesired reactions like cracking of feed molecules, resulting in lower product yield.

To overcome the limitations in using noble metal catalysts, nickel catalysts were widely employed for hydrogenation of aromatics. For example, 4-14 wt.% nickel catalyst modified with 0-0.9 wt.% Cu was reported by US 7348463 for benzene saturation reactions. US 8207083 describes preparation of a catalyst comprising of nickel, silica, alumina and magnesium wherein atomic ratio of Ni/Mg is 5-75 with high hydrogenation activity for unsaturated fatty oils. US 8518851 reported a catalyst system comprises of 40-85 wt.% nickel supported on silica and having preferred nickel silicate phase with mono-model Ni crystallite size distribution of 1.5-3.5 nm. Recently, US 10258969 disclosed a catalyst comprising of an active phase of nickel on alumina and having nickel content in the range 5-65 wt.%. Further, continuous de-aromatization of feedstocks having 30 wt.% aromatics and 5 ppm sulphur over nickel-alumina catalysts in interchangeable reactors is described in US 10246652.

Aromatic saturation is a thermodynamically limited reaction and therefore increased conversion of aromatics to saturated ring compounds at given operating pressures can be achieved only with the application of superiorly active catalysts. Although, Ni based catalyst systems are already reported for aromatic saturation, the activity of such catalyst systems is required to be further enhanced to achieve ultra-low aromatic content in hydrocarbon streams, especially in diesel and kerosene to use as solvents. In most of the prior arts, to obtain high performance, catalysts are prepared with substantially higher loading of nickel metal, which is not an attractive approach due to economic reasons and difficulty in manufacturing of such catalysts. Furthermore, the activity of Ni/Al₂O₃ catalysts is often retarded through the strong chemical interactions between Ni metal and alumina as reported by Holmen et.al. [Holmen et.al, Appl. Catal. A: Gen., 2008, 346, 1-27]. Nickel aluminate phases which are likely to be formed in Ni/Al₂O₃ catalysts are non-reducible and poorly active and accordingly, the long-term stability and sustained performance of such catalysts, an essential requirement for commercial application, is always a matter of concern. To address above issues, the present invention discloses a process for preparing a high-active catalyst for hydrogenating unsaturated hydrocarbons, particularly aromatic compounds, in kerosene and diesel feedstocks, wherein the catalyst comprises of bimetallic active phases of nickel and cobalt supported on an activated alumina-ceria carrier.

### SUMMARY OF THE INVENTION

This summary is provided to introduce a selection of concepts, in a simplified format, that are further described in the detailed description of the invention. This summary is neither intended to identify key or essential inventive concepts of the invention and nor is it intended to determine the scope of the invention.

The present invention provides a catalyst with improved activity and stability for hydrogenation of unsaturated hydrocarbons, the catalyst comprising oxides of transition metals selected from the group comprising of nickel and cobalt and said oxides of transition metals being impregnated on an activated alumina-ceria carrier in a percentage of 20 to 30 weight percent of the total dry weight of the catalyst.

The present invention also provides a process for preparation of a catalyst, wherein the process comprises:
- admixing solution of nickel nitrate, and cobalt nitrate in a weak acid selected from the group comprising of acetic acid and formic acid with an activated alumina-ceria carrier to obtain a dough;
- extruding the dough through an extruder to form a wet catalyst extrudate of shape selected from cylindrical, trilobe or quadrilobed, wherein said shape is of diameter in the range of 1.2 to 1.5 mm;
- drying the wet catalyst extrudates at a temperature of 100 to 150 °C for 8 to 16 hours to obtain a dried catalyst;
- calcining the dried catalyst at a temperature of 400 to 600 °C for 2 to 4 hours to obtain an intermediate calcined catalyst;
- mixing the intermediate calcined catalyst obtained in preceding step with an aqueous precursor solution of nickel and cobalt nitrate, added with cetyltrimethyl ammonium bromide (CTAB), to obtain an impregnated catalyst;
- drying the impregnated catalyst at temperature of 100 to 140°C for 6 to 10 hours; and
- calcining the impregnated catalyst at temperature of 250 to 350°C for 4 to 8 hours to obtain the final catalyst.

### BRIEF DESCRIPTION OF THE DRAWINGS:

**Figure 1** depicts XRD spectra of hydrogenation catalyst: a) Catalyst A.
**Figure 2** depicts the results of long duration performance test of Catalyst A

### DETAILED DESCRIPTION OF THE INVENTION

The present invention broadly pertains to a catalyst for hydrogenating unsaturated hydrocarbons, particularly aromatic compounds, in middle distillate refinery streams like kerosene and diesel and a method of preparation of the catalyst.

For the purpose of promoting an understanding of the principles of the invention, reference will now be made to the embodiments in the specific language to describe the same. It will nevertheless be understood that no limitation of the scope of the invention is thereby intended, such alterations and further modifications in the illustrated process, and such further applications of the principles of the invention as illustrated therein being contemplated as would normally occur to one skilled in the art to which the invention relates. Unless otherwise defined, all technical and scientific terms used herein have the same meaning as commonly understood by one of ordinary skilled in the art to which this invention belongs. The composition, methods, and examples provided herein are illustrative only and not intended to be limiting.

The articles "a", "an" and "the" are used to refer to one or to more than one (i.e., to at least one) of the grammatical object of the article.

The term "some" as used herein is defined as "none, or one, or more than one, or all". Accordingly, the terms "none", "one", "more than one", "more than one, but not all" or "all" would all fall under the definition of "some". The term "some embodiments" may refer to no embodiments or to one embodiment or to several embodiments or to all embodiments. Accordingly, the term "some embodiments" is defined as meaning "no embodiment, or one embodiment, or more than one embodiment, or all embodiments".

More specifically, any terms used herein such as but not limited to "includes", "comprises", "has", "consists" and grammatical variants thereof is inclusive or open-ended and does not exclude additional, unrecited elements or method steps. The specification will be understood to also include embodiments which have the transitional phrase "consisting of" or "consisting essentially of" in place of the transitional phrase "comprising". The transitional phrase "consisting of" excludes any element, step, or ingredient not specified in the claim, except for impurities associated therewith. The transitional phrase "consisting essentially of" limits the scope of a claim to the specified materials or steps "and those that do not materially affect the basic and novel characteristic(s)" of the claimed invention.

Whether or not a certain feature or element was limited to being used only once, either way it may still be referred to as "one or more features" or "one or more elements" or "at least one feature" or "at least one element". Furthermore, the use of the terms "one or more" or "at least one" feature or element do NOT preclude there being none of that feature or element, unless otherwise specified by limiting language such as "there NEEDS to be one or more" or "one or more element is REQUIRED".

Use of the phrases and/or terms such as but not limited to "a first embodiment", "a further embodiment", "an alternate embodiment", "one embodiment", "an embodiment", "multiple embodiments", "some embodiments", "other embodiments", "further embodiment", "furthermore embodiment", "additional embodiment" or variants thereof do NOT necessarily refer to the same embodiments. Unless otherwise specified, one or more particular features and/or elements described in connection with one or more embodiments may be found in one embodiment, or may be found in more than one embodiment, or may be found in all embodiments, or may be found in no embodiments. Although one or more features and/or elements may be described herein in the context of only a single embodiment, or alternatively in the context of more than one embodiment, or further alternatively in the context of all embodiments, the features and/or elements may instead be provided separately or in any appropriate combination or not at all. Conversely, any features and/or elements described in the context of separate embodiments may alternatively be realized as existing together in the context of a single embodiment.

As used herein, the term "about" is used to indicate a range or approximation that allows for slight variations or deviations from a specific value or parameter without departing from the scope of the present invention. When "about" is used in conjunction with numerical values, it signifies that the disclosed value or parameter may vary by ±10%, preferably ±5%, of the indicated values.

The terminology and structure employed herein is for describing, teaching, and illuminating some embodiments and their specific features and elements and does not limit, restrict, or reduce the spirit and scope of the invention.

In one of the embodiments the present invention describes a catalyst with improved activity and stability for hydrogenation of unsaturated hydrocarbons, the catalyst comprising active component nickel oxide and cobalt oxide impregnated on an activated alumina-ceria carrier, to have its loading in the range of 20-30 wt.% of the total dry weight of the catalyst.

In another embodiment the present invention describes a catalyst with improved activity and stability for hydrogenation of unsaturated hydrocarbons, wherein the activated alumina-ceria carrier comprises gamma alumina modified with 2-10 wt.% of ceria; preferably, the alumina-ceria powder carrier comprising gamma alumina modified with 5 to 10 wt.% of ceria.

In another embodiment the present invention describes a catalyst with improved activity and stability for hydrogenation of unsaturated hydrocarbons, the catalyst comprising nickel oxide in 15-20 wt.% of the total dry weight; cobalt oxide in 5-10 wt.% of the total dry weight; and activated alumina-ceria carrier in 70-80 wt.% of the total dry weight; wherein nickel oxide and cobalt oxide are supported on the activated alumina-ceria carrier.

In another embodiment the present invention describes a catalyst with improved activity and stability for hydrogenation of unsaturated hydrocarbons, the catalyst comprising nickel oxide in 18.75 wt.% of the total dry weight; cobalt oxide in 6.25 wt.% of the total dry weight; and activated alumina-ceria carrier in 75 wt.% of the total dry weight, wherein nickel oxide and cobalt oxide are supported on the activated alumina-ceria carrier.

In another embodiment the present invention describes the catalyst has a surface area of 123-143 m²/g; pore volume of 0.34-0.44 cm³/g; and 70-84% of pores having diameter of 60-120 Å; preferably, the catalyst has a surface area of 133 m²/g; pore volume of 0.39 cm³/g; and 77% of pores having diameter of 60-120 Å.

According to another main embodiment of the present invention provides a process for the preparation of a catalyst with improved activity and stability for hydrogenation of unsaturated hydrocarbons, wherein the process comprises mulling the metal incorporated admixture of activated alumina-ceria carrier in a kneader to make a dough with the addition of a dilute acid selected from formic acid and acetic acid; shaping the dough to form a wet catalyst in granular shape or preferably as an extrudate having a shape selected from cylindrical, trilobe or quadrilobed; wherein diameter of the shape is in a range of 1.2-1.5 mm; drying the wet catalyst at temperature in a range of 120-150 °C to obtain a dried catalyst; calcining the dried catalyst at temperature in a range of 400-600 °C to obtain a calcined catalyst; impregnating the calcined catalyst in a precursor solution of nickel and cobalt to form an impregnated catalyst; drying the impregnated catalyst at temperature in a range of 120-150 °C; and calcining the impregnated catalyst at temperature in a range of 300-400 °C to obtain the catalyst.

According to an embodiment of the present invention, the incorporation of the nickel and cobalt metal salts partly in the activated alumina-ceria powder carrier and rest of nickel and cobalt metal salts to the extrudates through incipient wetness impregnation of nickel and cobalt metal salt solution having the required concentration of the nickel and cobalt metal is employed to prepare the catalyst.

According to another embodiment the present invention describes a method for the preparation of a catalyst comprises impregnating a group VIII metal solution in an alumina-ceria powder carrier followed by extrusion, impregnating a carrier extrudates with a solution of a group VIII metal salt or a combination of both methods.

According to another embodiment of the present invention, the group VIII metal are Ni and Co.

According to some embodiment of the present invention, 10 % to 20 % of the total nickel and cobalt metal is incorporated in the activated alumina-ceria carrier powder and rest 90 % to 80 % of nickel and cobalt metal is impregnated in the extrudates.

According to another embodiment the present invention, the activated alumina-ceria carrier has a surface area of 310-330 m²/g; and pore volume of 0.4-0.7 cm³/g.

According to another embodiment of the present invention describes the activated alumina-ceria carrier of the catalyst is prepared by a process comprising the steps of admixing a cerium precursor with an alumina through ball milling for 1-5 hours to obtain an admixture; heating the admixture with tetrapropylammonium hydroxide (TPAOH) at temperature in a range of 60-100 °C to form an aqueous slurry solution; filtering out the aqueous slurry solution and washing with de-mineralized water to obtain a wet solid product; and drying the wet solid product at 120 °C for 6-10 hours to obtain an activated alumina-ceria carrier.

According to another embodiment of the present invention the alumina is pseudo-boehmite alumina powder having more than 85% as crystalline phases; and surface area of more than 300 m²/g measured by low temperature nitrogen adsorption after dehydrating the sample under vacuum.

According to another embodiment the present invention describes the cerium precursor is selected from a group consisting of cerium nitrate, ammonium cerium nitrate, cerium sulfate, cerium hydroxide, ammonium cerium sulfate, cerium oxalate, cerium carbonate, cerium triacetate and cerium oxide.

In a preferred embodiment of the present invention, the cerium precursor is cerium oxide (ceria or ceria powder). Typically, the surface area of ceria available from commercial sources is in a range 20-30 m²/g.

According to another embodiment of the present invention, the concentration of cerium oxide in the aqueous slurry solution is in a range of 20-25% w/v.

According to another embodiment of the present invention, the concentration of TPAOH in the aqueous slurry solution is in a range of 3-6% w/v.

According to another embodiment the present invention describes the precursor solution of nickel is prepared from a nickel precursor selected from a group consisting of nickel nitrate, nickel carbonate, and nickel chloride; wherein the precursor solution of cobalt is prepared from a cobalt precursor selected from a group consisting of cobalt nitrate, cobalt acetate and cobalt carbonate.

According to another embodiment of the present invention, the alumina-ceria powder carrier is activated to improve its surface area and thus enable to disperse the bimetallic active sites comprising of nickel and cobalt metals, more finely on its surface. The strong Metal-Support Interactions (MSI) likely in alumina supported nickel catalysts leads to the formation of undesired stable and non-reducible phases and these phenomena cause fast deactivation and lowering of catalyst activity, which is one of the major concerns in commercial operation of nickel catalysts. The present invention adopts the approach of modification of the surface of alumina and activation of the carrier material to ensure long term stability and sustained performance of the catalyst. The activation of alumina-ceria material results in increased chemical interactions between alumina and ceria thereby enabling precise tuning of the surface characteristics of the carrier. The activation of the alumina-ceria also leads to effective control of chemical interactions between Ni or Co metal and alumina preventing the formation of poorly active, stable, and non-reducible phases in the catalyst. The modification of alumina can be carried out by incorporating various modifying elements like P, B, Si, Ti, Ce, La etc. into alumina.

According to some embodiment of the present invention, the activated alumina-ceria powder is a high surface area carrier and is use as an improved support for designing an efficient de-aromatization catalyst. The activated alumina-ceria carrier has BET surface area of at least 310 m²/g, and pore volume of 0.4-0.7 cm³/g; preferably, the activated alumina-ceria carrier has BET surface area of at least 330 m²/g, and pore volume of 0.5-0.7 cm³/g. The surface area of the alumina before activation is around 270 m²/g.

According to some embodiment of the present invention, the activated alumina-ceria carrier has at least 90% of the pore volume from the pores having diameter in a range of 60-120 Å of the total pore volume of the support.

According to some embodiment of the present invention, source of the group VIII metal is one or more of a group comprising nickel nitrate, nickel carbonate and nickel chloride for nickel or, cobalt nitrate, cobalt acetate and cobalt carbonate for cobalt.

According to an embodiment of the present invention, the salt solution of a group VIII metal used for impregnating extrudate is reacted with an organic additive; wherein the organic additive is one or more of compounds selected from a group consisting of a C14-C20 quaternary ammonium bromide selected from the group consisting of dodecyltrimethylammonium bromide, cetyltrimethylammonium bromide, tetradecylammonium bromide, heptadecylammonium bromide, trimethylstearylammonium bromide, dimethyldimyristylammonium Bromide, ethylhexadecyldimethylammonium bromide, dimethyldipalmitylammonium bromide, dimethyldioctadecylammonium bromide, a polyethylene glycol (PEG) selected from the group consisting of PEG 200, PEG 300, PEG 400, PEG 600, PEG 1000, PEG 2000, PEG 4000, PEG 6000, an amine selected from the group consisting of N,N-bimethyltetradecylamine, tetradecylamine, pentadecylamine, hexadecylamine, heptadecylamine, octadecylamine, nonadecylamine and a carboxylic acid selected from the group consisting of 2-hexyldecanoic acid, myristic acid, penta decanoic acid, palmitic acid, hepta decanoic acid, stearic acid, nona decanoic acid, arachidic acid.

In another embodiment of the present invention, molar ratio of the organic additive to the group VIII metal is in a range of 0.05-1.0, more preferably in the range 0.1-0.5.

According to some embodiment of the present invention, the catalyst is characterized by X-Ray Diffraction (XRD) and X-Ray Photoelectron Spectroscopy (XPS).

According to an embodiment of the present invention, the catalyst is characterized by Temperature Programmed Reduction (TPR) technique using 5% H₂ in Ar as probe gas in the temperature range 150-850 °C to investigate reducibility of the catalyst of present invention. Alumina supported nickel oxide-based catalysts are generally pretreated with hydrogen gas at appropriate conditions of temperature and pressure to generate reduced metal active sites before using it for the hydrogenation of hydrocarbon feeds. Accordingly, higher reducibility of the catalyst is an essential requirement for obtaining high active catalysts.

According to another embodiment of the present invention, the TPR patterns show that the catalyst of present invention (Catalyst A) is found to consume more H₂ as compared to the comparative catalyst R1 having NiO alone, especially at lower temperatures in the range 150-500 °C showing increased reducibility of the catalyst. Based on TPR data, at least 50% of the loaded metal in the catalyst of present invention undergoes reduction with hydrogen gas in the temperature range 150-850 °C. The improved reducibility of Catalyst A is attributed to the formation of bimetallic NiCo cluster as active phases on activated alumina-ceria carrier in the catalyst of present invention.

According to another embodiment of the present invention, the reducibility of catalyst also dependent on the metal-support interaction. The effective modification of alumina with ceria as in this present invention reduced the metal-support interaction and thereby increased the reducibility to form a greater number of active sites.

According to an embodiment of the present invention, the de-aromatization process is carried out in commercial units by hydrogenating the feedstock with hydrogen gas in fixed bed adiabatic reactors at typical reaction conditions of temperature in a range 150-300 °C, pressure in a range 20-50 bar and H₂ gas to oil ratio of 250-1200 Nm³/m³ more preferably in the range 180-230 °C, pressure in a range 20-30 bar and H₂ gas to oil ratio of 300-500 Nm³/m³. The catalyst of the present invention is evaluated in the pilot plant reactors using kerosene and diesel feed at conditions identical to commercial units to benchmark the catalysts. The catalyst prepared according to the present invention is found to exhibit higher catalytic activity for the hydrogenation of aromatics to ultra-low levels for kerosene and diesel. Performance test of Catalyst A was conducted for a long duration of 30 days and no deactivation of catalyst and loss in activity was observed.

Thus, it is concluded that catalyst of present invention is highly active and stable, suited to be used for hydrogenating aromatics in kerosene and diesel streams to produce ultra-low aromatic products. Accordingly, the use of catalyst of present invention is highly advantageous to dearomatize hydrocarbon feedstocks and thereby efficiently produce value added diesel and kerosene-based solvents.

In an embodiment, the advantages of the catalyst of the present disclosure include but are not limited to the following:
- The present invention discloses a process for preparing a catalyst for hydrogenating unsaturated hydrocarbons, particularly aromatic compounds in kerosene and diesel streams, and this novel preparation process is suited to obtain a catalyst with substantially higher activity than similar catalysts reported in prior arts.
- The catalyst prepared as per the preset invention comprises of 15-20 w% of nickel and 5-10 w% cobalt, as oxides, supported on alumina-ceria carrier comprising of gamma alumina modified with 2-10 w% of ceria. The composition of the catalyst and process for preparing the catalyst is unique and distinctly different from the catalysts in the prior art.
- The present invention also discloses a method for activating the alumina-ceria composite material made from commercially available alumina and ceria, thereby the alumina-ceria is having higher surface area as compared to the starting composite, which results in enhanced surface interactions between the alumina and ceria leading to highly effective surface modification of the carrier. The enhanced surface area of the carrier will also enable to disperse the active metals more finely on its surface. The efficient modification of alumina surface with ceria as in the present invention increases the reducibility of active metals to obtain a greater number of active sites. The method of preparation of such improved carrier material is not disclosed in any of the prior arts.
- Nickel and cobalt metals are chemically interacted to form a bimetallic active phase on the catalyst surface whereas conventional alumina supported monometallic active phases reported in prior arts. The chemical interactions between the metals are indicated by the spectral features observed in the X-Ray Diffraction (XRD) patterns and X-ray Photoelectron spectroscopy (XPS). Formation of chemically bound bimetallic active metal sites is a key feature of present invention over prior arts.
- For the catalyst of present invention, on Temperature Programmed Reduction (TPR) in the temperature range 150-850 °C, at least 40% of the loaded metal, more preferably 50% of the loaded metal undergoes reduction with hydrogen gas. The present invention enables increased uptake of hydrogen gas, resulting in the reduction of larger fraction of loaded metals on carrier surface and thereby forming of increased number of metal active sites. Higher reducibility of the catalyst of present invention is resultant of reduced metal-support interaction in the catalyst due to the unique methodology adopted in present invention for modification and activation of the carrier.
- The catalyst of present invention has exhibited higher activity than conventional Ni/Al₂O₃ based catalysts reported in the prior art and this catalyst has enabled deep de-aromatization of kerosene and diesel streams to obtain ultra-low aromatic solvent which is premium high valued product being used in several industries.
- The catalyst of present invention uses relatively lower amounts of metals in the catalyst as compared to most of the prior arts, to obtain high performance of the catalysts. This will make the invention more attractive due to economic benefits and ease in manufacturing of such catalysts. Further, in contrast to several prior arts, absence of acid sites in the catalyst of present invention avoids undesired cracking of feed molecules and results in higher product yield. Therefore, commercial use of present invention offers more economic benefits over prior arts.

### EXAMPLES:

The present disclosure with reference to the accompanying examples describes the present invention. However, those of skill in the art should, in light of the present disclosure, appreciate that many changes can be made in the specific embodiments which are disclosed and still obtain a like or similar result without departing from the spirit and scope of the invention. It is understood that the examples are provided for the purpose of illustrating the invention only and are not intended to limit the scope of the invention in any way.

### Example 1: Preparation of Activated Al₂O₃-CeO₂

Cerium oxide powder (220g, 99.9%) was thoroughly mixed with pseudo-boehmite alumina powder (2712g, 73w% Al₂O₃) and grinded together in a ball-mill for a period of 1 hour. This solid mixture was then slurried in 9000 ml De-mineralized water dissolved with TPAOH (265mL, 40%). The slurry solution was heated at 80 °C for 16 hours under stirring. The solution was then cooled and filtered. The wet solid was washed with water and then dried at 120 °C for 8 hours to obtain the activated Al₂O₃-CeO₂ support. The physio-chemical properties of the activated powder of Al₂O₃- CeO₂ support is given in Table 1.

**Table 1: Textural properties of Al₂O₃-CeO₂**

| **S. No.** | **Sample** | **Surface Area (m²/g)** | **Pore Volume (cm³/g)** | **% Pores 60-120 Å** |
|---|---|---|---|---|
| 1 | Ceria | 28 | 0.04 | - |
| 2 | Al₂O₃ | 303 | 0.65 | 91 |
| 3 | Al₂O₃+CeO₂ | 273 | 0.53 | 90 |
| 4 | Activated Al₂O₃-CeO₂ (Al₂O₃ = 93 wt.%, CeO₂ = 7 wt.% | 330 | 0.64 | 92 |

### Example 2: Preparation of catalyst

The activated Al₂O₃-CeO₂ powder (2900g, 97%) thus obtained was then mixed in a ribbon blender with slow addition of 600mL aqueous solution of 247.5g nickel nitrate (98%), 247.5g cobalt nitrate (98%) and acetic acid (200mL, 3w%) over a period of 30 minutes. The resultant dough was then extruded in to 1.3 mm sized trilobe shaped extrudates using a twin-screw extruder. The wet extrudates were dried at 120 °C for 12 hours and then calcined at 550 °C for 3h to obtain the intermediate catalyst. Calcined extrudates has surface area of 200 m²/g and pore volume of 0.6 cm³/g. Further amounts of metals were loaded in the catalyst by pore volume impregnation, for which nickel nitrate (1829.3g, 98%) and cobalt nitrate (443.3g, 98%) were dissolved in water along with 152 gm of cetyltrimethyl ammonium bromide (CTAB), and this solution was poured over and mixed with the intermediate catalyst extrudates. Impregnated catalyst was then dried at 120 °C for 8 hours and calcined at 300 °C for 6 hours to obtain the catalyst of present invention, designated as Catalyst A. The physio-chemical properties of Catalyst A are given in Table 2.

**Table 2: Textural properties of Catalysts**

| **S.No.** | **Sample** | **Catalyst A** | **Catalyst R1** | **Catalyst R2** |
|---|---|---|---|---|
| 1 | % NiO | 18.75 | 25 | 0 |
| 2 | % CoO | 6.25 | 0 | 25 |
| 3 | % Activated Al₂O₃-CeO₂ Carrier | 75 | 75 | 75 |
| 4 | Surface Area (m²/g) | 133 | 131 | 135 |
| 5 | Pore Volume (cm³/g) | 0.39 | 0.38 | 0.37 |
| 6 | % Pores in 60-120 Å Dia. | 77 | 75 | 76 |

### Comparative Example 1: Preparation of Ni/Al₂O₃-CeO₂

Ni/Al₂O₃-CeO₂ was prepared as per the method described in Example-1, except that cobalt salt is not added either to the powder or to the extrudates. 495g of nickel nitrate (98%) was added to the activated Al₂O₃-CeO₂ powder and additional quantity of nickel nitrate (2272.6g, 98%) dissolved in water and reacted with 152 g of CTAB was incorporated to these catalyst extrudates through pore volume impregnation method. The catalyst was dried at 120 °C overnight and calcined at 300 °C for 6 hours to obtain Comparative Catalyst R1.

### Comparative Example-2: Preparation of Co/Al₂O₃-CeO₂

Co/Al₂O₃-CeO₂ was prepared as per the method described in Example-1, except that nickel salt is not added either to the powder or to the extrudates. 495g of cobalt nitrate (98%) was added to the activated Al₂O₃-CeO₂ powder and then cobalt nitrate (2272.6g, 98%) was dissolved in water along with 152 gm of CTAB was incorporated to the extrudates through pore volume impregnation method. The catalyst was dried at 120 °C overnight and calcined at 300 °C for 6 hours to obtain Comparative Catalyst R2.

### Example-3

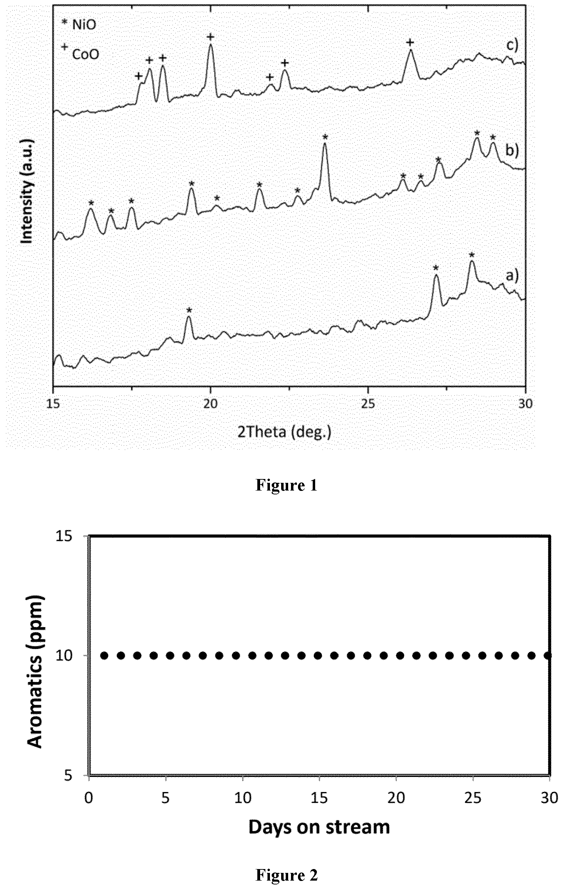

Catalysts A was analysed by X-Ray Diffraction (XRD) spectroscopy against Catalyst R1 and R2 to recognize the crystalline phases in the catalysts and the XRD patterns are given in Fig. 1. X-ray diffraction patterns were recorded on rotating anode Rigaku Rint 2500 theta instrument using CuKα (λ= 0.15418 nm) powered at 50 kV and 100 mA, in the 20 range of 5 to 75 with a step size of 0.01° and scan rate of 2°/min.

The XRD pattern of the catalyst A shows shifting of bands as compared to comparative catalyst R1 and catalyst R2. The shifting of XRD bands is attributed to the chemical bonding between Co and Ni metals. Accordingly, XRD data are indicative of the presence of chemically bonded NiO and CoO phases in Catalyst A.

### Example-4

Catalysts A was analysed by Temperature Programmed Reduction (TPR) against Catalyst R1 to evaluate the reducibility of catalysts. TPR experiments are performed using BELCAT instrument equipped with TCD detector using 10 vol % H₂/Ar gas as probe. Catalysts were initially pre-treated in argon atmosphere at 500 °C for 1h at the ramp rate of 5 °C/min to dehydrate the catalyst and remove weakly bound surface moisture. TPR analysis was then carried out from 150 °C to 850 °C at the ramp rate of 5 °C/min in 10 vol % H₂/Ar atmosphere. H₂ consumption values of the catalysts are given in Table 3.

**Table 3: H₂ Consumption values of hydrogenation catalysts**

| **S. No** | **Catalyst** | **H₂ uptake (mmol/g)** | | | | **% Reducibility** |
|---|---|---|---|---|---|---|
| | | 150 500 °C | 500-700 °C | 700-850 °C | Total | |
| 1 | Catalyst A | 0.193 | 0.630 | 0.075 | 0.898 | 54 |
| 2 | Catalyst R1 | 0.132 | 0.618 | 0.044 | 0.794 | 47 |

### Example-5

Catalysts A was analysed by X-ray Photoelectron Spectroscopy against Catalyst R1 and R2 to identify the chemical states of the metal oxides on the support. The XPS analysis was performed on a Physical Electronics - Versa Probe III 5000 using Al Ka source (hv = 1486.6 eV). The carbon 1s peak at 284.6 eV was taken as reference. Survey spectra were collected over a binding energy range of 0-1100 eV, with a pass energy of 100 eV, step size of 1 eV, and dwell time of 10 ms. High resolution spectra were collected with a pass energy of 20 eV, step size of 0.1 eV, and dwell time of 50 minutes. The data were processed by MultiPak software.

The XPS spectra of the catalyst of present invention shows Ni 2P^{3/2} binding energy at 854.6 eV with its satellite peak at 860.3 eV and Co 2P^{3/2} binding energy at 780 eV with its satellite peak at 785.4 eV. In the case of catalysts with Ni or Cobalt alone, Ni 2P^{3/2} binding energy is observed at 855.2 eV with its satellite peak at 860.8 eV (Catalyst R1) and Co 2P^{3/2} binding energy is observed at 781.7 eV with its satellite peak at 787.3 eV (Catalyst R2) The shifting of binding energies of Ni 2P^{3/2} and Co 2P^{3/2} in Catalyst A (catalyst of the present invention) in comparison to Catalyst R1 (Ni/Al₂O₃-CeO₂) and R2 (Co/Al₂O₃-CeO₂) furthers confirm the chemical bonding between Ni and Co. Accordingly, the catalyst of present invention is believed to form a unique bimetallic active metal cluster, in which both Ni and Co metals are in close proximity and electronically linked.

### Example-6

Catalysts A was evaluated in a continuous fixed bed reactor of 230 cc capacity against Catalyst R1 towards hydrogenation of kerosene and diesel streams separately. 40 cc catalyst was loaded into the reactor centre zone in the form of extrudates and SiC was used as inert material to fill the reactor. Catalyst was activated in hydrogen atmosphere at 450 °C at a ramp of 5 °C/min and then it was cooled to 180-220 °C. The reactor was pressurized with hydrogen to 50-70 bar maintaining gas to oil ratio of 500-700 Nm³/m³ at a LHSV of 0.5-1.5 h-1 for all the experiments. Kerosene and diesel feeds and the respective products obtained were analysed and their properties for catalyst A and Catalyst R1 were given in Table 3 and Table 4, for kerosene and diesel de-aromatization, respectively. Long duration performance evaluation was also conducted for a period of 30 days with kerosene feed and product properties were monitored continuously, as indicated in Figure 2.

**Table 3: Kerosene de-aromatization: Feed and product characteristics**

| **Operating Parameters** | | | |
|---|---|---|---|
| Temperature (°C) | 180 | | |
| Pressure (bar) | 65 | | |
| LHSV (h-1) | 1 | | |
| Gas to oil (Nm3/m3) | 500 | | |

| **Feed and Product Properties** | | | |
|---|---|---|---|
| | **Feed** | **Catalyst A** | **Catalyst R1** |
| Distillation (D2887) °C | | | |
| 20 wt.% | 162 | 159 | 161 |
| 40 wt.% | 187 | 186 | 186 |
| 60 wt.% | 209 | 207 | 208 |
| 80 wt.% | 233 | 231 | 232 |
| 90 wt.% | 248 | 247 | 247 |
| 95 wt.% | 260 | 259 | 259 |
| Aromatics (ppm) | 109000 | 10 | 300 |
| Density (g/cc) | 0.799 | 0.794 | 0.794 |

**Table 4: Diesel de-aromatization: Reed and Product Characteristics**

| **Operating Parameters** | | | |
|---|---|---|---|
| Temperature (°C) | 210 | | |
| Pressure (bar) | 65 | | |
| LHSV (h-1) | 1 | | |
| Gas to oil (Nm3/m3) | 500 | | |

| **Feed and Product Properties** | | | |
|---|---|---|---|
| | **Feed** | **Catalyst A** | **Catalyst R1** |
| Distillation (D2887) °C | | | |
| 20 wt.% | 279 | 276 | 276 |
| 40 wt.% | 315 | 312 | 312 |
| 60 wt.% | 347 | 345 | 345 |
| 80 wt.% | 375 | 371 | 373 |
| 90 wt.% | 390 | 386 | 387 |
| 95 wt.% | 402 | 398 | 401 |
| Aromatics (ppm) | 110000 | 210 | 5000 |
| Density (g/cc) | 0.829 | 0.823 | 0.823 |

## Claims

1. A catalyst with improved activity and stability for hydrogenation of unsaturated hydrocarbons, the catalyst comprising oxides of transition metals selected from the group comprising of nickel and cobalt and said oxides of transition metals being impregnated on an activated alumina-ceria carrier in a percentage of 20 to 30 weight percent of the total dry weight of the catalyst.

2. The catalyst as claimed in claim 1, wherein the catalyst comprises of nickel oxide and cobalt oxide, and wherein the activated alumina-ceria carrier comprises a gamma alumina modified with 2 to 10 weight percent of ceria.

3. The catalyst as claimed in claim 2, wherein:
- the nickel oxide is in 15 to 20 weight percent of the total dry weight of the catalyst;
- the cobalt oxide is in 5 to 10 weight percent of the total dry weight of the catalyst; and
- the activated alumina-ceria carrier is in 70 to 80 weight percent of the total dry weight of the catalyst, and
wherein the nickel oxide and the cobalt oxide are supported on the activated alumina-ceria carrier.

4. The catalyst as claimed in claim 2 or 3, wherein:
- the nickel oxide is in 18.75 weight percent of the total dry weight;
- the cobalt oxide is in 6.25 weight percent of the total dry weight; and
- activated alumina-ceria carrier is in 75 weight percent of the total dry weight, and wherein the nickel oxide and the cobalt oxide are supported on the activated alumina-ceria carrier.

5. The catalyst as claimed in any one of claims 1 to 4, wherein the catalyst has a surface area of 110 to 170 m²/g; a pore volume of 0.25 to 0.45 cm³/g; and wherein the catalyst has 60 to 90% of pores having a diameter of 60 to 120 Å.

6. The catalyst as claimed in any one of claims 1 to 5, wherein the catalyst has substantially improved performance towards hydrogenation of unsaturated hydrocarbons particularly aromatic compounds in refinery kerosene streams to obtain ultra-low aromatic solvents having an aromatic content as low as 10 ppm.

7. The catalyst as claimed in any one of claims 1 to 6, wherein the unsaturated hydrocarbons are in a middle distillate refinery stream selected from the group comprising kerosene and diesel stream.

8. A process for preparation of a catalyst as defined in any one of claims 1 to 7, wherein the process comprises:
- admixing solution of nickel nitrate, and cobalt nitrate in a weak acid selected from the group comprising of acetic acid and formic acid with an activated alumina-ceria carrier to obtain a dough;
- extruding the dough through an extruder to form a wet catalyst extrudate of shape selected from cylindrical, trilobe or quadrilobed, wherein said shape is of diameter in the range of 1.2 to 1.5 mm;
- drying the wet catalyst extrudates at a temperature of 100 to 150 °C for 8 to 16 hours to obtain a dried catalyst;
- calcining the dried catalyst at a temperature of 400 to 600 °C for 2 to 4 hours to obtain an intermediate calcined catalyst;
- mixing the intermediate calcined catalyst obtained in preceding step with an aqueous precursor solution of nickel and cobalt nitrate, added with cetyltrimethyl ammonium bromide (CTAB), to obtain an impregnated catalyst;
- drying the impregnated catalyst at temperature of 100 to 140°C for 6 to 10 hours; and
- calcining the impregnated catalyst at temperature of 250 to 350°C for 4 to 8 hours to obtain the final catalyst.

9. The process as claimed in claim 8, wherein the activated alumina-ceria carrier has a surface area of 310 to 330 m²/g; and pore volume of 0.4 to 0.7 cm³/g.

10. The process as claimed in claim 8 or 9, wherein the precursor solution of nickel is prepared from a nickel precursor selected from a group consisting of nickel nitrate, nickel carbonate, and nickel chloride; wherein the precursor solution of cobalt is prepared from a cobalt precursor selected from a group consisting of cobalt nitrate, cobalt acetate and cobalt carbonate.

11. The process as claimed in any one of claims 8 to 10, wherein the precursor solution of nickel and cobalt are treated with an organic additive; wherein the organic additive is one or more compounds selected from a group consisting of a C14-C20 quaternary ammonium bromide selected from the group consisting of dodecyltrimethylammonium bromide, cetyltrimethylammonium bromide, tetradecylammonium bromide, heptadecylammonium bromide, trimethylstearylammonium bromide, dimethyldimyristylammonium Bromide, ethylhexadecyldimethylammonium bromide, dimethyldipalmitylammonium bromide, dimethyldioctadecylammonium bromide, a polyethylene glycol (PEG) selected from the group consisting of PEG 200, PEG 300, PEG 400, PEG 600, PEG 1000, PEG 2000, PEG 4000, PEG 6000, an amine selected from the group consisting of N,N-bimethyltetradecylamine, tetradecylamine, pentadecylamine, hexadecylamine, heptadecylamine, octadecylamine, nonadecylamine and a carboxylic acid selected from the group consisting of 2-hexyldecanoic acid, myristic acid, penta decanoic acid, palmitic acid, hepta decanoic acid, stearic acid, nona decanoic acid, arachidic acid; wherein molar ratio of the organic additive to nickel and cobalt is in a range of 0.05 to 1.0.

12. The process as claimed in any one of claims 8 to 11, wherein the activated alumina-ceria carrier is prepared by a process comprising the steps of:
- admixing a cerium precursor with an alumina through ball milling for 1 to 5 hours to obtain an admixture;
- heating the admixture with tetrapropylammonium hydroxide (TPAOH) at temperature in a range of 60 to 100 °C to form an aqueous slurry solution;
- filtering out the aqueous slurry solution and washing with de-mineralized water to obtain a wet solid product; and
- drying the wet solid product for 6 to 10 hours to obtain an activated alumina-ceria carrier.

13. The process as claimed in claim 12, wherein the alumina is pseudo-boehmite alumina powder having more than 85% as crystalline phases; and surface area of more than 300 m2/g.

14. The process as claimed in claim 12 or 13, wherein the cerium precursor is selected from a group consisting of cerium nitrate, ammonium cerium nitrate, cerium sulfate, cerium hydroxide, ammonium cerium sulfate, cerium oxalate, cerium carbonate, cerium triacetate and preferably cerium oxide; and wherein the concentration of cerium oxide in the aqueous slurry solution is in a range of 20 to 25% w/v.

15. The process as claimed in any one of claims 12 to 14, wherein the concentration of TPAOH in the aqueous slurry solution is in a range of 3 to 6% w/v.
